# EUROPÄISCHE PATENTSCHRIFT

(11) **EP 1 053 270 B1**
(45) Veröffentlichungstag und Bekanntmachung des Hinweises auf die Patenterteilung: **17.04.2002**
(21) Anmeldenummer: 99904802.8
(22) Anmeldetag: 20.01.1999
(51) Int. Cl.: C08G 18/12, C08G 18/63, C08F 283/00, B05D 7/16

(54) **WÄSSRIGE ÜBERZUGSMITTEL, IHRE HERSTELLUNG UND VERWENDUNG BEI DER HERSTELLUNG VON MEHRSCHICHTLACKIERUNGEN**
AQUEOUS COATING AGENT, PREPARATION OF THE SAME AND USE THEREOF FOR MULTI-LAYERED LACQUERING
AGENT DE REVETEMENT AQUEUX, SA PREPARATION ET SON UTILISATION DANS LE CADRE DE MISES EN PEINTURE MULTICOUCHE

(30) Priorität: 07.02.1998 DE 19805004
(43) Veröffentlichungstag der Anmeldung: 22.11.2000
(73) Patentinhaber: E.I. DU PONT DE NEMOURS & COMPANY INCORPORATED, Wilmington, Delaware 19898 (US)
(72) Erfinder: BOSCH, Werner, D-42389 Wuppertal (DE); GÖBEL, Armin, D-58300 Wetter (DE); SCHMIDT, Holger, D-42115 Wuppertal (DE); VOGT-BIRNBRICH, Bettina, D-42719 Solingen (DE)
(74) Vertreter: Gille Hrabal Struck Neidlein Prop Roos
(86) Internationale Anmeldenummer: EP9900359
(87) Internationale Veröffentlichungsnummer: WO9940139

(56) Entgegenhaltungen:
- WO-A-97/43327
- DE-A- 4 413 562
- US-A- 5 041 494

## Beschreibung

Die Erfindung betrifft wäßrige Überzugsmittel, die wäßrige Bindemitteldispersionen auf der Basis von Hybridpolymeren enthalten, welche hergestellt werden durch radikalische Copolymerisation von olefinisch ungesättigten Monomeren in Gegenwart von wäßrig dispergierten Siloxanbrücken und/oder Silanolgruppen enthaltenden und von olefinischen Doppelbindungen freien Polyurethanharzen. Sie betrifft auch Verfahren zur Herstellung der wäßrigen Überzugsmittel und Verfahren zur Mehrschichtlackierung unter Verwendung dieser Überzugsmittel, insbesondere als Wasserbasislack in Verfahren zur Herstellung dekorativer Mehrschichtlackierungen vom Typ Wasserbasislack/Klarlack.

Polyurethan/Poly(meth)acrylat-Polymerhybride sind als Bindemittel für wäßrige Überzugsmittel bekannt.

Die EP-A-0 297 576 beschreibt die Polymerisation von (Meth)acrylmonomeren in Gegenwart zuvor hergestellter Polyurethandispersionen. Nach Abschluß der Polymerisation können aus den erhaltenen Dispersionen wäßrige Basislacke hergestellt werden.

Die EP-A-0 353 797 beschreibt die Herstellung eines hydroxyfunktionellen Polyurethanharzes in einem olefinisch ungesättigten Monomer als Lösungsmittel, wobei das ungesättigte Monomer gegenüber Isocyanat reaktiv sein kann. Nach Überführung der Polyurethanlösung in die wäßrige Phase wird eine Emulsionspolymerisation durchgeführt. Die erhaltene Hybridpolymer-Dispersion kann als Wasserbasislackbindemittel verwendet werden.

Aus WO 95 28 429 sind als Bindemittel für Wasserbasislacke geeignete wäßrige Polyurethandispersionen bekannt, die auf durch ionische und/oder hydrophile Gruppen stabilisierten und über Siloxanbrücken kettenverlängerten Polyurethanharzen basieren.

Aus WO 95 28 428 ist ein Verfahren zur Herstellung einer Mehrschichtlackierung unter Verwendung eines selbstvernetzenden Wasserbasislacks bekannt, der als Bindemittel eine wäßrige Polyurethanharzdispersion auf der Basis eines Polyurethanharzes mit lateralen und/oder terminalen an Silizium gebundenen Hydroxyl- und/oder R'O-Gruppen enthält.

Zur Vermeidung von Ablauferscheinungen ist es wünschenswert, wenn wäßrige Überzugsmittel hohe Ablaufgrenzen besitzen. Anderenfalls können sie in nur begrenzter Schichtdicke appliziert werden, insbesondere bei Farbtönen mit geringer Deckfähigkeit ist dann ein Auftrag in mehreren Spritzgängen mit Zwischentrocknung bzw. Zwischenablüften erforderlich.

Die Anmelderin hat in den noch nicht veröffentlichten Patentanmeldungen PCT/EP 97/04821 und P 197 46 327 wäßrige, als Wasserbasislack verwendbare Überzugsmittel vorgeschlagen, die wäßrige Bindemitteldispersionen auf der Basis von Hybridpolymeren enthalten, welche hergestellt werden durch radikalische Copolymerisation von Siloxanbrücken und/oder Silanolgruppen sowie olefinische Doppelbindungen enthaltenden Polyurethanharzen mit olefinisch ungesättigten Comonomeren.

Aufgabe der vorliegenden Erfindung ist die Bereitstellung wäßriger Überzugsmittel mit hoher Ablaufgrenze, die insbesondere für Mehrschichtlackierungen geeignet sind, insbesondere für die Erstellung von farb- und/oder effektgebenden Schichten. Sie sollen in nur einem einzigen Spritzgang in hohen Schichtdicken zu einem deckenden Überzug applizierbar sein.

Die Erfindung besteht in der Bereitstellung wäßriger Überzugsmittel, enthaltend eine wäßrige Bindemitteldispersion, sowie gegebenenfalls ein oder mehrere organische Lösemittel, Vernetzer, Pigmente. Füllstoffe, lackübliche Additive und/oder ein oder mehrere weitere Bindemittel, die dadurch gekennzeichnet sind, daß die wäßrige Bindemitteldispersion basiert auf Polyurethan/Polymerisat-Polymerhybriden mit einem Gewichtsverhältnis von Polyurethan- zu Polymerisatanteil von 0.1 : 1 bis 50 : 1. wobei der Polyurethananteil des Polyurethan/Polymerisat-Polymerhybriden frei von olefinischen Doppelbindungen ist, mit einer Hydroxylzahl von 0 bis 150. bezogen auf Festharz, wobei an Silizium gebundene Hydroxylgruppen bei der Berechnung der OH-Zahl nicht mitgezählt werden, und einer Säurezahl von 1,5 bis 60 mg KOH/g, bezogen auf Festharz, und einem Gehalt von 0,5 bis 300 mmol Silizium pro 100 g Festharz in Form von in den Polyurethananteil eingebundenen Siloxanbrücken (-Si-O-Si-) und/oder in Form von an den Polyurethananteil gebundenen Silanolgruppen. Die Polyurethan/Polymerisat-Polymerhybriden sind erhältlich durch Polymerisation von olefinisch ungesättigten Monomeren in Gegenwart von von olefinischen Doppelbindungen freien Polyurethan-Prepolymeren.

Die Hybridpolymeren bestehen aus Polyurethan- und Polymerisatanteilen. Dabei können Polyurethan- und Polymerisatanteil als interpenetrierendes Netzwerk vorliegen und/oder der Polymerisatanteil ist auf den Polyurethananteil gepfropft. Bei den beim Aufbau des Polymerisatanteils des Polyurethan/Polymerisat-Polymerhybriden zur Polymerisation gelangenden olefinischen Doppelbindungen der olefinisch ungesättigten Monomeren handelt es sich um allylische und/oder vinylische Doppelbindungen und/oder um alpha,beta-ungesättigte Carbonylgruppen, beispielsweise bevorzugt (meth)acrylische Doppelbindungen. Dabei beträgt der Anteil allylischer Doppelbindungen bevorzugt unter 10 %, während es sich bevorzugt zu mindestens 50 %, bevorzugt zu mehr als 70 % um (Meth)acryloylgruppen handelt. Sind mehr als 50 % der an der Polymerisation beteiligten olefinischen Doppelbindungen (Meth)acryloylgruppen, so handelt es sich bei den Hybridpolymeren um Polyurethan/Poly(meth)acrylat-Polymerhybride.
Die in den erfindungsgemäßen wäßrigen Überzugsmitteln eingesetzte Bindemitteldispersion auf der Basis von Polyurethan/Polymerisat-Polymerhybriden weist eine auf Festharz bezogene Säurezahl von 1,5 bis 60 mg KOH/g, bevorzugt 3 bis 40 mg KOH/g auf. Bevorzugt sind die Säuregruppen zu mindestens 70 %, bevorzugt ausschließlich Bestandteil des Polyurethananteils. Die Säuregruppen dienen der Stabilisierung der Polymerhybridteilchen in der wäßrigen Phase. Die Polyurethan/Polymerisat-Polymerhybriden können zusätzliche stabilisierende hydrophile nichtionische Gruppen enthalten, beispielsweise Polyalkylenoxidgruppen, z.B. Polyethylenoxidgruppen.
Die in den erfindungsgemäßen wäßrigen Überzugsmitteln eingesetzte Bindemitteldispersion auf der Basis von Polyurethan/Polymerisat-Polymerhybriden weist eine auf Festharz bezogene Hydroxylzahl von 0 bis 150, bevorzugt unter 100 mg KOH/g auf. Eine eventuelle Hydroxylzahl des Bindemittels kann aus dessen Polyurethananteil und/oder aus dessen Polymerisatanteil herrühren.

Die in den erfindungsgemäßen wäßrigen Überzugsmitteln einsetzbaren wäßrigen Bindemitteldispersionen basieren auf Hybridpolymeren, die herstellbar sind durch radikalische Polymerisation von olefinisch ungesättigten Monomeren in Gegenwart von Siloxanbrücken und/oder Silanolgruppen enthaltenden und von olefinischen Doppelbindungen freien Polyurethanharzen.
Die wäßrigen Bindemitteldispersionen auf der Basis von Polyurethan/Polymerisat-Polymerhybriden können beispielsweise hergestellt werden, indem man ein Säuregruppen enthaltendes und von olefinischen Doppelbindungen freies Polyurethan-Prepolymer, das durchschnittlich 0,7 bis 9 an Silizium gebundene R'O-Gruppen pro Molekül aufweist, worin
R' = C1- bis C8-Alkyl oder C(O)R''', und
R'" = C1- bis C10-Alkyl
bedeuten, und das in einem gegenüber Isocyanat inerten Lösemittel gelöst vorliegen kann, gegebenenfalls nach vorheriger Neutralisation der Säuregruppen durch Zusatz von Wasser in eine wäßrige Dispersion überführt und danach gemeinsam mit olefinisch ungesättigten Monomeren einer radikalischen Polymerisation unterwirft. Dabei können die olefinisch ungesättigten Monomeren vor und/oder nach Herstellung der wäßrigen Dispersion zugesetzt werden. Beispielsweise können die oder ein Teil der olefinisch ungesättigten Monomeren vor der Herstellung der wäßrigen Dispersion die Funktion eines gegenüber Isocyanat inerten Lösemittels übernehmen, welches nicht wieder entfernt werden muß.

Die Herstellung der Säuregruppen enthaltenden und von olefinischen Doppelbindungen freien Polyurethan-Prepolymeren mit durchschnittlich 0.7 bis 9 bevorzugt an laterales und/oder terminales Silizium gebundenen R'O-Gruppen pro Molekül kann beispielsweise erfolgen durch Herstellung eines linearen oder verzweigten, nicht gelierten, von olefinischen Doppelbindungen freien, Säuregruppen enthaltenden sowie hydroxyfunktionellen Polyurethan-Prepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren, Umsetzung der Hydroxylgruppen des so erhaltenen Polyurethan-Prepolymeren mit einem oder mehreren Silanen der allgemeinen Formel

((OCN-)ₙR)ₐSi(OR')_{b}(R")_{c}

- mit R =: ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1 bis C8-Alkyl oder C(O)R''', bevorzugt C1 bis C4-Alkyl, R" = R"' = C1- bis C10-Alkyl, wobei R'' und R"' gleich oder verschieden sein können, a = 1,2 oder 3, bevorzugt 1, b = 1,2 oder 3, bevorzugt 2 oder 3, c = 0, 1 oder 2, n = 1 bis 3, bevorzugt 1 oder 2, besonders bevorzugt 1. wobei mehrere Reste R', R" und R'" gleich oder verschieden sind und worin die Summe aus a plus b plus c vier ergibt.

Bevorzugt erfolgt die Herstellung der Säuregruppen enthaltenden und von olefinischen Doppelbindungen freien Polyurethan-Prepolymeren mit durchschnittlich 0.7 bis 9 bevorzugt an laterales und/oder terminales Silizium gebundenen R'O-Gruppen pro Molekül beispielsweise durch:
1) Herstellung eines linearen oder verzweigten, nicht gelierten, von olefinischen Doppelbindungen freien, Säuregruppen enthaltenden sowie isocyanatfunktionellen Polyurethan-Prepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren,
2) Umsetzung der freien Isocyanatgruppen des so erhaltenen Polyurethan-Prepolymeren
   a1) mit einer oder mehreren Verbindungen der allgemeinen Formel

      ((H-X)ₙR)ₐSi(OR')_{b}(R'')_{c} (I)

      mit X = O,S,NH oder NR'^{v}, bevorzugt NH oder NR'^{v},
      R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1 bis C8-Alkyl oder C(O)R''', bevorzugt C1 bis C4-Alkyl, R" = R''' = C1- bis C10-Alkyl, wobei R" und R''' gleich oder verschieden sein können, R'^{v} = C1- bis C8-Alkyl, a = 1,2 oder 3, bevorzugt 1, b = 1, 2 oder 3, bevorzugt 2 oder 3, c = 0,1 oder 2, n = 1 bis 3, bevorzugt 1 oder 2, besonders bevorzugt 1, wobei mehrere Reste R', R" und R"' gleich oder verschieden sind und worin die Summe aus a plus b plus c vier ergibt,
   a2) gegebenenfalls mit einem oder mehreren NH₂- und/oder NH-Gruppen tragenden Alkanolaminen mit einer OH-Funktionalität von mindestens 1, und
   a3) gegebenenfalls mit einem oder mehreren aliphatischen C4-C36-Alkoholen und/oder -Aminen.

Die Herstellung des R'OSi-funktionalisierten Polyurethan-Prepolymeren über NCO-Prepolymere kann in einem sogenannten Einstufenverfahren durchgeführt werden, d.h. die vorstehend beschriebenen Verfahrensschritte 1) und 2) können simultan durchgeführt werden, indem die dort benötigten Edukte gleichzeitig miteinander umgesetzt werden oder bevorzugt im sequentiellen Herstellungsverfahren. Bei der Auswahl der Reaktionspartner, der Reaktionsbedingungen und der Reihenfolge der Zugabe der einzelnen Reaktionspartner ist darauf zu achten, daß unerwünschte Nebenreaktionen ausgeschlossen werden.

Die beispielsweise im Verfahrensschritt 1) erfolgende Herstellung des linearen oder verzweigten, nicht gelierten, von olefinischen Doppelbindungen freien, Säuregruppen enthaltenden sowie isocyanatfunktionellen Polyurethan-Prepolymeren kann beispielsweise erfolgen durch Umsetzung von einer oder mehreren Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei gegenüber Isocyanatgruppen reaktiven Gruppen und mindestens einer Säuregruppe.

Beispielsweise kann ein als Ausgangsprodukt verwendbares, NCO-Gruppen enthaltendes Polyurethan-Prepolymer hergestellt werden durch Umsetzung in wasserfreiem Milieu von
b1) mindestens einer linearen oder verzweigten Verbindung, die mindestens zwei gegenüber Isocyanat reaktive Gruppen trägt mit einem mittleren Molekulargewicht von 60 - 10000, bevorzugt 60- 6000,
b2) mindestens einem organischen Polyisocyanat, insbesondere Diisocyanat,
b3) mindestens einer Verbindung mit mehr als einer mit Isocyanat reaktiven Gruppen, und mindestens einer Säuregruppe, mit einer zahlenmittleren Molmasse (Mn) bis zu 10000, bevorzugt bis zu 2000 in einem NCO/OH-Verhältnis von über 1 bis 4:1.

Bevorzugt handelt es sich bei der vorstehend genannten linearen oder verzweigten Verbindung der Komponente b1) um mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 - 10000, bevorzugt über 1000 und unter 6000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Alle Herstellungsverfahren für NCO-Gruppen enthaltende Polyurethan-Prepolymere können als Ein- oder Mehrstufenverfahren durchgeführt werden.

Das Isocyanatgruppen enthaltende Polyurethan-Prepolymere weist bevorzugt einen Gehalt von Urethan-(-NHCOO-) und gegebenenfalls Harnstoff-(-NHCONH-) Gruppen zwischen 10 und 300 Milliequivalente pro 100 g Festharz auf.

Die zur Herstellung des NCO-Gruppen enthaltenden Polyurethan-Prepolymeren als Komponente b1) eingesetzten Verbindungen können beispielsweise eine lineare oder verzweigte Polyolkomponente, z.B. Diole sein. Es handelt sich beispielsweise um dem Fachmann geläufige Polyole, die auf dem Gebiet der Polyurethan-Chemie eingesetzt werden. Geht man von einer linearen Diolkomponente aus, können zum Erzielen einer Verzweigung des Polymeren Anteile an Polyolen mit einer Funktionalität von 3 oder mehr zugesetzt werden. Dabei ist die Menge so zu wählen, daß keine Gelbildung bei der Synthese des NCO-Gruppen enthaltenden Polyurethan-Prepolymeren auftritt.

Beispiele für die Polyolkomponente b1) können Polyetherpolyole, insbesondere Polyetherdiole, beispielsweise Polethylenglykole, Polypropylenglykole oder Polytetrahydrofurandiole sein.

Als weitere Beispiele für Polyolkomponenten b1) können Polyesterpolyole genannt werden. Man kann die Polyesterpolyole z.B. durch Veresterung von organischen Dicarbonsäuren oder ihren Anhydriden mit organischen Polyolen herstellen. Die Dicarbonsäuren und die Polyole können aliphatische, cycloaliphatische oder aromatische Dicarbonsäuren und Polyole sein. Die Polyester besitzen vorzugsweise ein Molekulargewicht von 300 bis 6000, eine OH-Zahl von 20 bis 400 und eine Säurezahl von kleiner 3, bevorzugt kleiner 1. Bevorzugt werden lineare Polyester, also Polyesterdiole eingesetzt.

Als Komponente b1) können z.B. auch Polycarbonatdiole eingesetzt werden.

Ferner lassen sich auch Polyesterpolyole, bevorzugt -diole, die sich von Lactonen ableiten, als Komponente b1) benutzen.

Bei den in b1) gegebenenfalls mitverwendbaren niedermolekularen Verbindungen handelt es sich besonders um Alkohole und Amine. Es sind die aus der Polyurethanchemie an sich bekannten im Sinne einer Isocyanat-Additionsreaktion mindestens difunktionellen Hydroxyl- und/oder Aminogruppen aufweisenden Verbindungen eines unter 600, bevorzugt unter 400 liegenden Molekulargewichts. Es kommen sowohl im Sinne der Isocyanatadditionsreaktion difunktionelle Verbindungen als auch mindestens trifunktionelle bzw. beliebige Gemische derartiger Verbindungen in Betracht.

Als Komponente b2) können beliebige organische Polyisocyanate, wie z.B. Diisocyanate eingesetzt werden. Es können aliphatische, cycloaliphatische, aromatische oder araliphatische Diisocyanate eingesetzt werden. Beispiele für geeignete Diisocyanate sind Hexamethylendiisocyanat, Isophorondiisocyanat, Bis-(4-isocyanatocyclohexyl)methan, Bis-(4-isocyanatophenyl)-methan, Tetramethylxylylendiisocyanat und 1,4-Cyclohexylendiisocyanat.

Als Komponente b3) können bevorzugt niedermolekulare Verbindungen verwendet werden, die mehr als eine. bevorzugt zwei oder mindestens zwei mit Isocyanatgruppen reagierende Gruppen und mindestens eine Säuregruppe enthalten. Geeignete mit Isocyanatgruppen reagierende Gruppen sind insbesondere Hydroxylgruppen und primäre und sekundäre Aminogruppen. Als Säuregruppen kommen z.B. Carboxyl-, Phosphorsäure- und Sulfonsäuregruppen in Betracht. Die bevorzugt einzuführenden Säuregruppen sind Carboxylgruppen; sie können beispielsweise durch Verwendung von Hydroxyalkancarbonsäuren als Komponente b3) eingeführt werden. Bevorzugt sind Dihydroxyalkansäuren, insbesondere alpha.alpha-Dimethylolalkansäuren wie alpha,alpha-Dimethylolpropionsäure.

Als Komponente b3) können auch saure Polyester wie sie in der DE-A-39 03 804 beschrieben sind, eingesetzt werden.

Die Mengen an b1), b2) und b3) werden so gewählt, daß bei der Umsetzung ein Umsetzungsprodukt mit lateralen und/oder terminalen NCO-Gruppen entsteht, d.h. es wird mit einem Polyisocyanatüberschuß gearbeitet. Man kann mit einem NCO- zu OH-Verhältnis von über 1 bis 4 : 1 arbeiten, bevorzugt ist der Bereich von 1,1 bis 2 : 1, besonders bevorzugt von 1,1 bis 1,7 : 1. Das Umsetzungsprodukt kann verzweigt aufgebaut sein, bevorzugt ist es im allgemeinen aber linear aufgebaut mit terminalen NCO-Gruppen.

Das in Verfahrensschritt 1) erhaltene NCO-Gruppen enthaltende Polyurethan-Prepolymer wird in Verfahrensschritt 2)
a1) mit einer oder mehreren Verbindungen der allgemeinen Formel

   ((H-X-)ₙR)ₐSi(OR')_{b}(R")_{c} (I)

   mit X = O,S,NH oder NR'^{v}, bevorzugt NH oder NR'^{v}, R = bifunktioneller bis tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1- bis C8-Alkyl oder C(O)R''', bevorzugt C1- bis C4-Alkyl, R" = R''' = C1- bis C10-Alkyl. R'^{v} = C1-bis C8-Alkyl, a = 1,2 oder 3, bevorzugt 1, b = 1.2 oder 3, bevorzugt 2 oder 3, c = 0,1 oder 2, n = 1 bis 3, bevorzugt 1 oder 2, besonders bevorzugt 1 und worin die Summe aus a plus b plus c vier ergibt,
a2) gegebenenfalls mit einem oder mehreren NH₂- und/oder NH-Gruppen tragenden Alkanolaminen mit einer OH-Funktionalität von mindestens 1, und
a3) gegebenenfalls mit einem oder mehreren aliphatischen C4-C36-Alkoholen und/oder -Aminen.
zu einem Säuregruppen enthaltenden und von olefinischen Doppelbindungen freien, R'OSi-funktionalisierten Polyurethan-Prepolymeren umgesetzt.

Bei den Verbindungen der allgemeinen Formel (I) handelt es sich um Silanderivate, die gegenüber Isocyanatgruppen zur Addition befähigte, aktiven Wasserstoff enthaltende Gruppen vom Typ (H-X-)ₙR- aufweisen. Als aktiven Wasserstoff enthaltende, funktionelle Gruppen HX- sind Aminogruppen bevorzugt. n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, mit einem Molekulargewicht von 13 bis 500. Bevorzugt handelt es sich beim Rest R um einen bifunktionellen (Ar)alkylenrest mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene R'O-Gruppen, wobei R' bevorzugt die Bedeutung von C1- bis C8-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan. N-(2-Aminoethyl-3-aminopropyl)trimethoxysilan. N-2-Aminoethyl-3-aminopropyl-tris(2-ethylhexoxy)silan. 6-(Aminohexylaminopropyl)trimethoxysilan, N-Aminoethyl-3-aminopropyl-methyldimethoxysilan genannt.

Die Umsetzung des NCO-funktionellen Polyurethan-Prepolymeren zum R'OSi-funktionalisierten Polyurethan-Prepolymeren erfolgt unter vollständigem Verbrauch der HX-Gruppen der Verbindungen (I).

Das der im erfindungsgemäßen wäßrigen Überzugsmittel einsetzbaren Bindemitteldispersion zugrundeliegende Polyurethan/Polymerisat-Hybridpolymere kann Hydroxylgruppen besitzen. Ist dieses gewünscht, so kann das NCO-Gruppen enthaltende Polyurethan-Prepolymer bei der Herstellung des R'OSi-funktionalisierten Polyurethan-Prepolymeren im Rahmen des optionalen Verfahrensschrittes a2) mit mindestens einem NH₂- und/oder NH-Gruppen tragenden Alkanolamin mit einer OH-Funktionalität von mindestens 1 umgesetzt werden. Die Umsetzung erfolgt dann unter vollständigem Verbrauch der NH₂- und/oder NH-Gruppen des Alkanolamins.

Bei den NH₂- und/oder NH-Gruppen tragenden Alkanolaminen mit einer OH-Funktionalität von mindestens 1 handelt es sich um Verbindungen, die als Lieferanten für Hydroxylgruppen in der Bindemitteldispersion dienen können und allein oder gemeinsam mit eventuellen Hydroxylgruppen aus dem Polymerisatanteil zur Hydroxylzahl des Bindemittels beitragen. Die NH- oder NH₂-Gruppen der Alkanolamine weisen gegenüber den Isocanatgruppen des NCO-funktionellen PU-Prepolymeren eine im Vergleich zu ihren OH-Gruppen deutlich höhere Reaktivität auf, d.h. bevorzugt reagieren die NH-Gruppen mit den Isocyanatgruppen unter Harnstoffbildung.

Beispiele für geeignete Alkanolamine mit einer OH-Funktionalität von mindestens 1 sind Monoalkanolamine und Dialkanolamine, z.B. Diethanolamin, N-Methylethanolamin, Diisopropanolamin, N-Ethylisopropanolamin.

Monoisopropanolamin, Ethanolamin, 2,2-Aminoethoxyethanol, Monoethylethanolamin, Butylethanolamin. Cyclohexylethanolamin, 3-Aminopropanol, 2-Aminobutanol-1.

Es kann zweckmäßig sein, wenn anstelle der oder gemeinsam mit den NH₂- und/oder NH-Gruppen tragenden Alkanolaminen im optionalen Verfahrensschritt a3) auch ein oder mehrere aliphatische C4-C36-Alkohole und/oder -Amine eingesetzt werden, deren Umsetzung dann in der Regel unter vollständigem Verbrauch ihrer OH-, NH- und/oder NH₂-Gruppen erfolgt. Fettamine und/oder Fettalkohole mit mehr als 12 C-Atomen sind bevorzugt. Beispiele sind Laurylalkohol, Stearylalkohol sowie die entsprechenden Amine.

Die Isocyanatgruppen des NCO-funktionellen Polyurethan-Prepolymeren werden mit den HX-Gruppen von (I), den NH-Gruppen des gegebenenfalls eingesetzten Alkanolamins und den gegenüber Isocyanat reaktiven Gruppen des gegebenenfalls eingesetzten C4-C36-Alkohols und/oder -Amins bevorzugt im stöchiometrischen Verhältnis zur Reaktion gebracht. Dabei können Alkanolamin, C4-C36-Alkohol und/oder -Amin und die Verbindung (I) in Mischung oder nacheinander in geeigneter Reihenfolge mit dem NCO-funktionellen Polyurethan-Prepolymer umgesetzt werden.

Im so erhaltenen Polyurethan-Prepolymeren mit durchschnittlich 0,7 bis 9 an Silizium gebundenen R'O-Gruppen pro Molekül gegebenenfalls noch verbliebene restliche freie Isocyanatgruppen können vor der Überführung des Prepolymeren in die Wasserphase mit den üblichen gegenüber Isocyanat zur Addition befähigten, aktiven Wasserstoff enthaltenden Verbindungen umgesetzt werden. Beispiele für geeignete aktiven Wasserstoff enthaltende Verbindungen sind Monoalkohole, Diole, Polyole. Glykolether, Monoamine, Diamine, Polyamine.

Die Umsetzung der zum Aufbau des NCO-funktionellen Polyurethan-Prepolymeren eingesetzten Komponenten als auch die weitere Umsetzung zum R'OSi-funktionalisierten Polyurethan-Prepolymeren erfolgen im wasserfreien Milieu beispielsweise bei Temperaturen von 20 bis 140°C, bevorzugt zwischen 50 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder wasserunmischbare Lösemittel eingesetzt werden. Im allgemeinen ist es vorteilhaft, solche Lösemittel zu verwenden, die in jedem Stadium der Herstellung der wäßrigen Bindemitteldispersion (beispielsweise nach deren Fertigstellung) entfernt werden können, beispielsweise durch Abdestillieren gegebenenfalls unter vermindertem Druck.

Beispiele für geeignete Lösemittel sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, Dipropylenglykoldimethylether, oder auch cyclische Harnstoffderivate, wie 1,3-Di-methyl-3,4,5,6-tetrahydro-2(1H)-pyrimidinon.

Das so erhaltene Polyurethan-Prepolymere mit durchschnittlich 0,7 bis 9 an Silizium gebundenen R'O-Gruppen pro Molekül wird durch Zusatz von Wasser in eine wäßrige Dispersion überführt, bevorzugt nach Neutralisation seiner Säuregruppen. Die Säuregruppen können mit einem Neutralisationsmittel vollständig oder teilweise in die entsprechenden Salzgruppen überführt werden. Dies kann in allen Stadien der vorstehend beschriebenen Synthese geschehen, wobei zu beachten ist, daß die Auswahl der zur Salzbildung eingesetzten Verbindungen so getroffen wird, daß diese sich während der Synthese chemisch inert verhalten.

Zur Neutralisation dienen Basen, z.B. Amine, bevorzugt tertiäre Amine. Beispiele für geeignete Basen sind Ammoniak oder organische Amine wie 2-Amino-2-methylpropanol-1, Trialkylamine, wie Trimethylamin, Triethylamin, Triisopropylamin; N-Alkylmorpholine, wie N-Methylmorpholin; N-Dialkylalkanolamine, wie N-Dimethylethanolamin und N-Dimethylisopropanolamin und deren Mischungen.

Die Überführung in die wäßrige Dispersion kann so erfolgen. daß das Poiyurethan-Prepolymer mit Wasser vermischt wird. Dazu kann die gesamte Wassermenge auf einmal oder bevorzugt zunächst nur ein Teil der gesamten Wassermenge mit dem Polyurethan-Prepolymer vermischt werden. Das Wasser kann zum Harz gegeben werden. Ebenso möglich ist die Zugabe des Harzes zum Wasser

Die R'OSi-Gruppen des Polyurethan-Prepolymeren sind hydrolyseempfindlich. Über den Verlauf der Wasserzugabe können unterschiedliche Produkte erhalten werden. Beispielsweise kann gesteuert werden, ob das Hybridbindemittel Silizium in Form von in den Polyurethanteil eingebundenen Siloxanbrücken (-Si-O-Si-) oder in Form von an den Polyurethanteil gebundenen Silanolgruppen enthält bzw. wie das Verhältnis von Siloxanbrücken zu Silanolgruppen liegt.

Soll das Hybridpolymere Silizium in Form von Silanolgruppen, beispielsweise im wesentlichen nur in Form von Silanolgruppen enthalten, so ist es wesentlich, daß innerhalb kurzer Zeit eine solche Menge an Wasser zugegeben wird, die ausreichend ist, eine weitere Reaktion der durch Hydrolyse gebildeten Silanolgruppen zu verhindern. Die Wasserzugabe erfolgt in mehr als zehnfachem stöchiometrischen Überschuß der zur Hydrolyse der R'OSi-Gruppen notwendigen Wassermenge. Bevorzugt wird der mindestens 50-fache stöchiometrische Überschuß zugesetzt. Besonders bevorzugt erfolgt der Wasserzusatz in einer solchen Menge, daß mindestens die Hälfte der zur Herstellung der wäßrigen Dispersion benötigten Wassermenge auf einmal zugesetzt wird. Durch Zusatz der ausreichenden Wassermenge wird eine unter Wasserabspaltung verlaufende Kondensation der durch Hydrolyse gebildeten Silanolgruppen zu Siloxanbrücken weitestgehend vermieden, d.h. man erhält eine wäßrige Dispersion eines Polyurethanharzes, das praktisch frei ist von Siloxanbrücken und das Silanolgruppen enthält.

Bevorzugt jedoch wird das Polyurethan-Prepolymer einer Kettenverlängerung unter Siloxanbrückenbildung unterzogen, indem man eine geringe zur Überführung in die wäßrige Phase nicht ausreichende Menge an Wasser, beispielsweise bevorzugt in mindestens stöchiometrischer Menge zur Hydrolyse der R'OSi-Gruppen zusetzt und das Reaktionsprodukt während oder nach der Kettenverlängerung gegebenenfalls nach vollständiger oder teilweiser Neutralisation in eine wäßrige Dispersion überführt. Die Kettenverlängerung des R'OSi-funktionalisierten Polyurethan-Prepolymeren erfolgt nach Zugabe eines bevorzugt bis zu maximal zehnfachen stöchiometrischen Überschusses, besonders bevorzugt bis zu maximal fünffachen stöchiometrischen Überschusses, berechnet auf die zur Hydrolyse der R'OSi-Gruppen notwendige Wassermenge. Die Hydrolyse der R'OSi-Gruppen läuft schnell ab. Die durch Hydrolyse gebildeten Silanolgruppen kondensieren unter Wasserabspaltung zu Siloxanbrücken und führen damit zu einem kettenverlängerten Polyurethanharz. das praktisch frei ist von Silanolgruppen, beispielsweise liegen über 80 %, insbesondere über 90 % des Siliziums als Siloxanbrücken gebunden vor. Abhängig vom eingesetzen R'OSi-funktionalisierten Polyurethan-Prepolymeren werden dabei lineare, verzweigte oder vernetzte Produkte gewonnen.

Die Überführung des gegebenenfalls neutralisierten Reaktionsprodukts in eine wäßrige Dispersion unter Zusatz einer ausreichenden Wassermenge kann während oder nach der Kettenverlängerung erfolgen und die Ausbildung der Siloxanbrücken erfolgt in der dispergierten oder nicht-dispergierten Harzphase, d.h. die Kettenverlängerung läuft in der Harzphase ab; wenn also das Harz bereits durch Zugabe einer ausreichenden Wassermenge dispergiert ist, so läuft die Kettenverlängerung in den Dispersionsteilchen selbst ab.

Die Hydrolysereaktion sowie die damit gegebenenfalls verlaufende Kettenverlängerung kann, falls gewünscht, bei erhöhter Temperatur durchgeführt werden. Beispielsweise sind Temperaturen bis zu 95°C geeignet.

Die Herstellung der wäßrigen Dispersion des Siloxanbrücken und/oder Silanolgruppen aufweisenden Polyurethanharzes kann nach bekannten Verfahren erfolgen. Beispielsweise ist es möglich, die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz. Wasser und Neutralisationsmittel homogen zusammengemischt. Die Überführung in die Wasserphase kann durch erhöhte Temperatur unterstützt werden.

Das Iösemittelfrei oder in organischer Lösung vorliegende Polyurethanharz wird durch Zugabe ausreichender Wassermengen in die wäßrige Phase überführt. Die Zugabe der zur Überführung in die wäßrige Phase ausreichenden Wassermenge kann nach Abschluß der Kettenverlängerung erfolgen. Es ist auch möglich die Hauptwassermenge während der Kettenverlängerung bzw. nach der Hydrolyse der R'OSi-Gruppen zuzugeben. Es ergibt sich eine feinteilige Polyurethandispersion mit einer mittleren Teilchengröße von größer 10 und kleiner als 2000 nm, bevorzugt über 50 und unter 500 nm. Die Verteilung kann dabei monomodal oder bimodal, bevorzugt monomodal sein.

Nach Erstellung der wäßrigen Dispersion des Siloxanbrücken und/oder Silanolgruppen, bevorzugt im wesentlichen nur Siloxanbrücken aufweisenden Polyurethanharzes erfolgt die letzte Synthesestufe bei der Herstellung der Bindemitteldispersion. Dabei handelt es sich um den Aufbau des Polymerisatanteils des Polyurethan/Polymerisat-Polymerhybrid-Bindemittels durch radikalische Polymerisation nach an sich bekannten Methoden. Bei der radikalischen Polymerisation kann es sich um eine in Gegenwart des wäßrig dispergierten Siloxanbrücken und/oder Silanolgruppen aufweisenden und von olefinischen Doppelbindungen freien Polyurethanharzes ablaufende Copolymerisation der zum Aufbau des Polymerisatanteils des Polyurethan/Polymerisat-Polymerhybrid-Bindemittels verwendeten olefinisch ungesättigten Monomeren handeln oder es handelt sich um eine durch H-Abstraktion vom wäßrig dispergierten Siloxanbrücken und/oder Silanolgruppen aufweisenden und von olefinischen Doppelbindungen freien Polyurethanharz eingeleitete Pfropfpolymerisation der zum Aufbau des Polymerisatanteils des Polyurethan/Polymerisat-Polymerhybrid-Bindemittels verwendeten olefinisch ungesättigten Monomeren auf den Polyurethananteil des Polyurethan/Polymerisat-Polymerhybrid-Bindemittels oder beide Formen der radikalischen Polymerisation laufen parallel ab. Werden bei der radikalischen Polymerisation der olefinisch ungesättigten Monomere auch polyungesättigte Monomere verwendet, so kann die radikalische Polymerisation so erfolgen, daß die polyungesättigten Monomeren unter vollständigem Verbrauch ihrer olefinischen Doppelbindungen einpolymerisiert werden oder daß ein Teil der polyungesättigten Monomeren unter unvollständigem Verbrauch ihrer olefinischen Doppelbindungen einpolymerisiert wird. Beispielsweise kann ein Teil der polyungesättigten Monomeren mit nur einem Teil ihrer jeweiligen ungesättigten Gruppen einpolymerisiert werden. so daß der Polymerisatanteil des resultierenden Polyurethan/Polymerisat-Polymerhybriden noch olefinische Doppelbindungen aufweisen kann.

Bei den zur Polymerisation gelangenden olefinischen Doppelbindungen handelt es sich um allylische und/oder vinylische Doppelbildungen und/oder um alpha,beta-ungesättigte Carbonylgruppen, beispielsweise bevorzugt (meth)acrylische Doppelbindungen. Dabei beträgt der Anteil allylischer Doppelbindungen bevorzugt unter 10 %, während es sich bevorzugt zu mindestens 50 %, bevorzugt zu mehr als 70 % um (Meth)acryloylgruppen handelt.

Die olefinisch ungesättigten Monomeren können als Teilmenge oder auch vollständig - wie vorstehend erwähnt in ihrer Funktion als Lösemittel während der Synthese des Polyurethanharzes - schon in der wäßrigen Dispersion vorliegen, oder sie werden bevorzugt zumindest als Teilmenge nach Erstellung der wäßrigen Dispersion zugesetzt und polymerisiert. Olefinisch ungesättigte Monomere und Radikalinitiatoren können gemeinsam, beispielsweise als Mischung oder ineinander gelöst oder getrennt, beispielsweise auch zeitlich versetzt zugegeben werden. Es kann zweckmäßig sein, die Monomeren- und Initiatorzugabe so durchzuführen, daß sich während der radikalischen Polymerisation keine Änderungen im Festkörpergehalt ergeben.

Die radikalische Polymerisation wird bei Temperaturen zwischen 20 und 95°C. bevorzugt zwischen 60 und 90°C, durchgeführt.

Beispiele für Radikalinitiatoren, die in üblichen Mengen eingesetzt werden können, sind Peroxidverbindungen wie Dialkylperoxide, Diacylperoxide, organische Hydroperoxide. Perester. Ketonperoxide; Azoverbindungen, wie Azobisisobutyronitril. Bevorzugt sind wasserlösliche Radikalinitiatoren wie beispielsweise Wasserstoffperoxid, Ammoniumperoxodisulfat, Ammoniumpersulfat, Ammoniumsalze der 4,4'-Azobis(4'-cyanpentansäure), 2,2'-Azobis(2-methyl-N-1,1-bis(hydroxymethyl)ethyl)propionamide, 2,2'Azobis(2-methyl-N-2-hydroxyethyl)propionamide.

Ebenfalls möglich ist es, die Polymerisation als Redoxpolymerisation durchzuführen unter Verwendung entsprechender Redoxinitiatorsysteme wie beispielsweise Natriumsulfit, Natriumdithionit. Ascorbinsäure und Peroxidverbindungen.

Als radikalisch polymerisierbare, olefinisch ungesättigte Monomere können solche verwendet werden, die keine funktionellen Gruppen tragen. Beispiele sind monovinylaromatische Verbindungen vorzugsweise mit 8 bis 10 Kohlenstoffatomen je Molekül, wie Styrol, Vinyltoluol; Vinylether und Vinylester, wie Vinylacetat, Vinylversatat; Malein-, Fumar-, Tetrahydrophthalsäuredialkylester, insbesondere aber (Cyclo)alkyl(meth)acrylate, wie Methyl(meth)acrylat, Ethyl(meth)acrylat, Propyl(meth)acrylat, Butyl(meth)acrylat, Hexyl(meth)acrylat, Cyclohexyl(meth)acrylat, Ethylhexyl(meth)acrylat, Dodecyl(meth)acrylat. Lauryl(meth)acrylat, Isobornyl(meth)acrylat.

Neben den nicht-funktionellen Monomeren können auch olefinisch ungesättigte Monomere mit funktionellen Gruppen eingesetzt werden. Beispiele sind solche mit CH-aciden, Epoxid-, Hydroxy- oder Carboxylgruppen, wobei zu beachten ist, daß die carboxyfunktionellen Monomeren zu nicht mehr als 30 % der Säurezahl des Polyurethan/Polymerisat-Polymerhybrid-Bindemittels beitragen sollen.

Beispiele für olefinisch ungesättigte Monomere mit Hydroxylgruppen, die alleine oder gemeinsam mit eventuellen Hydroxylgruppen aus dem Polyurethananteil zur Hydroxylzahl des erfindungsgemäßen Bindemittels beitragen können, sind Allylalkohol, insbesondere aber Hydroxyalkyl(meth)acrylate, wie Hydroxyethyl(meth)acrylat. Hydroxypropyl(meth)acrylat oder Butandiolmono(meth)acrylat. Glyzerinmono(meth)acrylat. Addukte von (Meth)acrylsäure an Monoepoxide wie z.B. Versaticsäureglycidylester. Addukte von Glycidyl(meth)acrylat an Monocarbonsäuren wie z.B Essigsäure oder Propionsäure.

Beispiele für carboxylgruppenhaltige olefinisch ungesättigte Monomere sind ungesättigte Carbonsäuren, wie z.B. (Meth)acryl-, Itacon-, Croton-. Isocroton-. Aconit-, Malein- und Fumarsäure, Halbester der Malein- und Fumarsäure.

Anteilig können auch olefinisch ungesättigte Monomere mit mindestens zwei polymerisierbaren, olefinischen Doppelbindungen eingesetzt werden. Beispielsweise liegt der Anteil dieser Monomeren bei 0 bis unter 5 Gew.-%, bezogen auf das Gesamtgewicht der zum Aufbau des Polymerisatanteils eingesetzten Monomeren. Der Anteil dieser Monomeren kann aber auch höher liegen, beispielsweise wenn der Polymerisatanteil stärker verzweigt oder vernetzt sein soll, beispielsweise liegt der Anteil dann bei 5 bis 45 Gew.-% polyungesättigte Monomere, bezogen auf das Gesamtgewicht der zum Aufbau des Polymerisatanteils eingesetzten Monomeren. Bei den polyungesättigten Monomeren handelt es sich in der Regel ausschließlich um niedermolekulare, durch eine Summenformel definierte Verbindungen mit einer Molmasse von im allgemeinen unter 500. Beispiele sind Divinylbenzol, Hexandioldi(meth)acrylat, Ethylen- und Propylenglykoldi(meth)acrylat, 1,3- und 1,4-Butandioldi(meth)acrylat, Vinyl(meth)acrylat, Allyl(meth)acrylat, Diallylphthalat, Glycerintri- und -di(meth)acrylat, Trimethylolpropantri- und -di(meth)acrylat, Pentaerythrittri- und -tetra(meth)acrylat, Di- und Tripropylenglykoldi(meth)acrylat.

Bei der Herstellung der wäßrigen Bindemitteldispersion werden die Mengenanteile der einzelnen Edukte bevorzugt so gewählt und die Reaktion so geführt, daß das der wäßrigen Bindemitteldispersion zugrundeliegende Polyurethan/Polymerisat-Hybridpolymere ein Gewichtsverhältnis von Polyurethan- zu Polymerisatanteil von 0,1 : 1 bis 10 : 1, eine Hydroxylzahl von 0 bis 150, bevorzugt unter 100 mg KOH/g, bezogen auf Festharz, wobei an Silizium gebundene Hydroxylgruppen bei der Berechnung der OH-Zahl nicht mitgezählt werden, und eine Säurezahl von 1.5 bis 60 mg KOH/g, bevorzugt 3 bis 40 mg KOH/g, bezogen auf Festharz und einen Gehalt von 0,5 bis 300 mmol, bevorzugt 1 bis 200 mmol, besonders bevorzugt 5 bis 75 mmol Silizium pro 100 g Festharz in Form von in den Polyurethanteil eingebundenen Siloxanbrücken (-Si-O-Si-) und/oder in Form von an den Polyurethanteil gebundenen Silanolgruppen aufweist.

Der Festkörpergehalt der in den erfindungsgemäßen wäßrigen Überzugsmitteln eingesetzten Bindemitteldispersionen beträgt bevorzugt zwischen 25 und 65 Gew.-%, besonders bevorzugt über 35 und unter 60 Gew.-%.

Gegebenenfalls in den wäßrigen Bindemitteldispersionen enthaltene Lösemittel können falls gewünscht durch Abdestillieren entfernt werden. Dies kann unter vermindertem Druck geschehen, beispielsweise vor oder nach der radikalischen Polymerisation.

Aus den wäßrigen Bindemitteldispersionen können die erfindungsgemäßen wäßrigen Überzugsmittel hergestellt werden. Bevorzugt handelt es sich dabei um Wasserbasislacke. Die erfindungsgemäßen wäßrigen Überzugsmittel können selbsttrocknend (physikalisch trocknend), selbstvernetzend oder fremdvernetzend sein. Die den wäßrigen Bindemitteldispersionen zugrundeliegenden Polyurethan/Polymerisat-Polymerhybride besitzen Hydroxylzahlen zwischen 0 und 150, bevorzugt zwischen 0 und 100 mg KOH/g. Dabei liegt die Hydroxylzahl bevorzugt dann im oberen Wertebereich, wenn fremdvernetzende wäßrige Überzugsmittel hergestellt werden sollen.

Zur Herstellung von wäßrigen Überzugsmitteln, bevorzugt Wasserbasislacken werden der wäßrigen Bindemitteldispersion beispielsweise Pigmente, weitere Bindemittel, Additive sowie gegebenenfalls geringe Mengen an Lösemitteln zugesetzt.

Die erfindungsgemäßen wäßrigen Überzugsmittel können neben der wäßrigen Bindemitteldispersion ein oder mehrere davon unterschiedliche zusätzliche Bindemittel enthalten. Beispiele für solche zusätzliche Bindemittel sind dem Fachmann geläufige übliche filmbildende wasserlösliche oder wasserverdünnbare Harze, wie wasserverdünnbare Polyesterharze, wasserverdünnbare Polyacrylatharze, wasserverdünnbare Polyurethanharze und/oder solche wasserverdünnbaren Bindemittel, in denen (Meth)acrylcopolymer und Polyurethanharz oder (Meth)acrylcopolymer und Polyesterharz kovalent oder in Form interpenetrierender Harzmoleküle verbunden vorliegen. Es kann sich um reaktive oder nicht-funktionelle Harze handeln. Die Menge der zugesetzten Harze kann 0 bis 75 Gew.-%, vorzugsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne einen Vernetzeranteil.

Zur Bereitung der erfindungsgemäßen wäßrigen Überzugsmittel können verschiedene Vernetzer, wie beispielsweise Formaldehyd-Kondensationsharze, wie Phenol-Formaldehyd-Kondensationsharze und Amin-Formaldehydkondensationsharze, sowie freie oder blockierte Polyisocyanate verwendet werden. Die Vernetzer können einzeln oder im Gemisch eingesetzt werden. Das Mischungsverhältnis Vernetzer zu Bindemittel beträgt bevorzugt 10 : 90 bis 40 : 60, besonders bevorzugt 20 : 80 bis 30 : 70, jeweils bezogen auf das Festkörpergewicht.

Weiterhin können die erfindungsgemäßen wäßrigen Überzugsmittel dem Fachmann bekannte Polymermikroteilchen enthalten. Es können vernetzte oder unvernetzte Mikroteilchen eingesetzt werden.

Weiterhin können die erfindungsgemäßen wäßrigen Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose. sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Katalysatoren, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, die zum besseren Dispergieren und Vermahlen der Pigmente eingesetzt werden können.

Der Lösemittelanteil der erfindungsgemäßen wäßrigen Überzugsmittel beträgt bevorzugt unter 20 Gew.-%, besonders bevorzugt unter 15 Gew.-%, insbesondere bevorzugt unter 10 Gew.-%. Es handelt sich um übliche lacktechnische Lösemittel, diese können von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1-6-Alkyl, Ethoxypropanol, Butylglykol; Glykole z.B. Ethylenglykol; Propylenglykol, und dessen Oligomere, N-Alkylpyrrolidone, wie z.B. N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte aliphatische C6 - C 12-Kohlenwasserstoffe.

Die erfindungsgemäßen wäßrigen Überzugsmittel können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente. Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel unter Scheren vermischt. Pulverförmige Effektpigmente können zunächst mit bevorzugt wasserverdünnbaren organischen Lösemitteln und Additiven zu einer Paste verarbeitet werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Ein Beispiel für ein im erfindungsgemäßen wäßrigen Überzugsmittel bevorzugt einsetzbares Pastenharz auf Polyurethanbasis findet sich in der DE-A-40 00 889. Das Anreiben kann in üblichen, dem Fachmann bekannten Aggregaten erfolgen. Danach wird mit dem restlichen Anteil des wäßrigen Bindemittels oder des wäßrigen Pastenharzes zur fertigen Farbpigmentanreibung komplettiert.

Sind im erfindungsgemäßen wäßrigen Überzugsmittel Pastenharze vorhanden, so addieren sich diese bei der Berechnung des Harzfestkörpers zu Bindemittel plus gegebenenfalls vorhandenem Vernetzer.

Die erfindungsgemäßen wäßrigen Überzugsmittel enthalten Basen als Neutralisationsmittel, beispielsweise die gleichen wie schon vorstehend als Neutralisationsmittel für das Hybridbindemittel erwähnt.

Die erfindungsgemäßen wäßrigen Überzugsmittel werden bevorzugt als Wasserbasislacke formuliert, wie sie für Mehrschichtlackierungen eingesetzt und mit transparenten Klarlacken überlackiert werden. Ein solcher Wasserbasislack besitzt beispielsweise einen Festkörpergehalt von 10 - 50 Gew.-%, für Effektwasserbasislacke liegt er beispielsweise bevorzugt bei 15 - 30 Gew.-%, für unifarbige Wasserbasislacke liegt er bevorzugt höher, beispielsweise bei 20 - 45 Gew.-%. Das Gewichtsverhältnis von Pigment (einschließlich Füllstoffe) zu Bindemittel plus gegebenenfalls Vernetzer plus gegebenenfalls Pastenharz im Wasserbasislack beträgt beispielsweise zwischen 0.03 : 1 bis 3 : 1, für Effektwasserbasislacke liegt es beispielsweise bevorzugt bei 0,06 : 1 bis 0.6 :1, für unifarbige Wasserbasislacke liegt es bevorzugt höher, beispielsweise bei 0.06 : 1 bis 2,5 : 1, jeweils bezogen auf das Festkörpergewicht.

Die erfindungsgemäßen Wasserbasislacke können nach üblichen Methoden appliziert werden. Bevorzugt werden sie durch Spritzen in einer Trockenschichtdicke von 8 bis 50 µm appliziert. für Effektwasserbasislacke liegt die Trockenschichtdicke beispielsweise bevorzugt bei 10 bis 25 µm, für unifarbige Wasserbasislacke liegt sie bevorzugt höher, beispielsweise bei 10 bis 40 µm. Die Applikation kann auch bei hohen Schichtdicken, beispielsweise 25 bis 50 µm, in einem Spritzgang durchgeführt werden, da die erfindungsgemäßen wäßrigen Überzugsmittel eine hohe Ablaufgrenze aufweisen. Mehrere Spritzgänge und ein damit verbundenes Zwischentrocknen oder Zwischenablüften können vermieden werden. Die Applikation erfolgt bevorzugt im Naß-in-Naß-Verfahren, d.h. nach einer Ablüftphase, z.B. bei 20 bis 80°C, werden die Wasserbasislackschichten mit einem üblichen Klarlack in einer Trockenschichtdicke von bevorzugt 30 bis 60 µm überlackiert und gemeinsam mit diesem bei Temperaturen von beispielsweise 20 bis 150°C getrocknet oder vernetzt. Die Trocknungsbedingungen der Decklackschicht (erfindungsgemäßer Wasserbasislack und Klarlack) richten sich nach dem verwendeten Klarlacksystem. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlack sind grundsätzlich alle bekannten Klarlacke oder transparent pigmentierten Überzugsmittel geeignet. Hierbei können sowohl lösungsmittelhaltige 1-oder 2-Komponenten-Klarlacke, wasserverdünnbare Klarlacke, Pulverklarlacke, wäßrige Pulverklarlackslurries oder durch Strahlung härtbare Klarlacke eingesetzt werden.

So erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d.h. Kunststoffsubstrate können z.B mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten. wie z.B. eine Fullerschicht.

Diese Schichten sind im allgemeinen ausgehärtet.

Mit den erfindungsgemäßen Wasserbasislacken erhaltene Mehrschichtlackierungen entsprechen den heute üblichen Anforderungen in der Kraftfahrzeuglackierung. Die erfindungsgemäßen Wasserbasislacke sind somit geeignet für die Fahrzeugerstlackierung und -reparaturlackierung, sie können jedoch auch in anderen Bereichen, z.B. der Kunststofflackierung, insbesondere der Fahrzeugteilelackierung, eingesetzt werden.

Die Erfindung betrifft weiterhin ein Substrat, beschichtet mit einem Mehrschichtüberzug, der erhalten worden ist durch Aufbringen mindestens einer Grundierungsschicht, bevorzugt auf Basis eines wasserverdünnbaren Überzugsmittels, Aufbringen einer farb- und/oder effektgebenden Basislackschicht mit einem erfindungsgemäßen wäßrigen Überzugsmittel, gegebenenfalls Trocknen der Basislackschicht und Aufbringen eines transparenten Überzugsmittels als Deckschicht und anschließende Erhitzung des beschichteten Substrates. Es können zu dieser Mehrschichtlackierung gegebenenfalls weitere zusätzliche Schichten hinzugefügt werden.

Die erfindungsgemäßen wäßrigen Überzugsmittel sind insbesondere als Wasserbasislacke zur Erstellung der farb- und/oder effektgebenden Überzugsschicht innerhalb einer Mehrschichtlackierung geeignet. Die erfmdungsgemäßen wäßrigen Überzugsmittel können in nur einem Spritzgang auch in hoher Schichtdicke appliziert werden, was bei der Applikation von Lackschichten mit schlecht deckenden Farbtönen besondere Bedeutung besitzt.

### Herstellungsbeispiel 1:

145,4 g eines Polyesters aus Adipinsäure, Neopentylglykol und Isophthalsäure (OH-Zahl: 109 mg KOH/g) und 8,0 g Dimethylolpropionsäure werden in 69.6 g N-Methylpyrrolidon gelöst und auf 40°C erwärmt. Danach werden 55.8 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 7,0 g 3-Aminopropyltriethoxysilan und 15,0 g Dodecanol zugegeben. Die Reaktionsmischung wird solange bei 80°C gehalten bis keine freien NCO-Gruppen mehr nachweisbar sind (Titration). Dann werden 128,0 g Methylmethacrylat zugegeben. Es werden 5,4 g Triethylamin und 5,4 g deionisiertes Wasser zugegeben und gut eingearbeitet. Nach der Zugabe von 864,0 g deionisierten Wassers erhält man eine feinteilige wäßrige Dispersion. Nun werden 250,0 g Butylacrylat, 125,0 g tert.-Butylacrylat und eine Lösung aus 62,0 g deionisierten Wassers und 2,0 g Ammoniumperoxodisulfat bei 80°C über 2 h kontinierlich zugegeben. Anschließend wird 3 h bei 80°C gehalten mit deionisiertem Wasser auf einen Festkörper (60'150°C) von 40,0 Gew.-% eingestellt.

### Herstellungsbeispiel 2:

339,0 g eines Polyesters aus Adipinsäure, Neopentylglykol und Cyclohexandicarbonsäure (OH-Zahl 104 mg KOH/g) und 13,7 g Dimethylolpropionsäure werden in 160,0 g N-Methylpyrrolidon gelöst und auf 40 °C erwärmt. Danach werden 125,0 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 43,8 g 3-Aminopropyltriethoxysilan und 20,8 g Diethanolamin zugegeben. Die Reaktionsmischung wird solange bei 80°C gehalten bis keine freien NCO-Gruppen mehr nachweisbar sind (Titration). Dann werden 128,0 g Methylmethacrylat zugegeben. Es werden 9,2 g Triethylamin und 9,2 g deionisiertes Wasser zugegeben und gut eingearbeitet. Nach der Zugabe von 1300.0 g deionisierten Wassers erhält man eine feinteilige wäßrige Dispersion. Nun werden 240,0 g Butylacrylat. 175,0 g tert.-Butylacrylat und eine Lösung aus 100,0 g deionisierten Wassers und 4,0 g Ammoniumperoxodisulfat bei 80 °C über 2 h kontinuierlich zugegeben. Anschließend wird 3 h bei 80°C gehalten und mit deionisiertem Wasser auf einen Festkörper (60'150°C) von 40,0 Gew.-% eingestellt.

### Herstellungsbeispiel 3:

772,0 g eines Polyesters aus Adipinsäure, Neopentylglykol und Isophthalsäure (OH-Zahl 100 mg KOH/g) und 89,0 g Dimethylolpropionsäure werden in 412.0 g N-Methylpyrrolidon gelöst und auf 40°C erwärmt. Danach werden 375,0 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 41,0 g 3-Aminopropyltriethoxysilan und 89,2 g Dodecanol zugegeben. Die Reaktionsmischung wird solange bei 80°C gehalten bis keine freien NCO-Gruppen mehr nachweisbar sind (Titration). Dann werden 886,0 g Styrol zugegeben. Es werden 60,0 g Triethylamin zugegeben und gut eingearbeitet. Nach der Zugabe von 4500,0 g deionisierten Wassers erhält man eine feinteilige wäßrige Dispersion. Nun werden 178,0 g Hydroxyethylmethacrylat, 712,0 g Butylacrylat, 890,0 g tert.-Butylacrylat und eine Lösung aus 850,0 g deionisierten Wassers und 50,0 g Ammoniumperoxodisulfat bei 80°C über 2 h kontinuierlich zugegeben. Anschließend wird 3 h bei 80°C gehalten und mit deionisiertem Wasser auf einen Festkörper (60'150°C) von 40,0 Gew.-% eingestellt.

### Herstellungsbeispiel 4:

697,3 g eines Polyesters aus Adipinsäure, Neopentylglykol und Isophthalsäure (OH-Zahl 100 mg KOH/g) und 80,0 g Dimethylolpropionsäure werden in 372,0 g N-Methylpyrrolidon gelöst und auf 40°C erwärmt. Danach werden 338,0 g Isphorondiisocyanat so zugegeben, daß eine Reaktionstemperatur von 80°C nicht überschritten wird. Es wird so lange gehalten bis ein NCO-Gehalt von 2 % (bezogen auf Festharz und bestimmt nach DIN 53185) erreicht ist. Danach werden nacheinander 37,2 g 3-Aminopropyltriethoxysilan und 83,6 g Dodecanol zugegeben. Die Reaktionsmischung wird solange bei 80°C gehalten bis keine freien NCO-Gruppen mehr nachweisbar sind (Titration). Dann werden 400,0 g Methylmethacrylat zugegeben. Es werden 54.2 g Triethylamin und 54.2 g deionisiertes Wasser zugegeben und gut eingearbeitet. Nach der Zugabe von 3900,0 g deionisierten Wassers erhält man eine feinteilige wäßrige Dispersion. Nun werden 267,0 g Hydroxyethylmethacrylat, 1066,0 g Butylacrylat, 663,0 g tert.-Butylacrylat und eine Lösung aus 1000,0 g deionisierten Wassers und 40,0 g Ammoniumperoxodisulfat bei 80°C über 2h kontinuierlich zugegeben. Anschließend wird 3h bei 80°C gehalten und mit deionisiertem Wasser auf einen Festkörper (60'150°C) von 40,0 Gew.-% eingestellt.

### Lackbeispiel 1

### 1.1 Herstellung eines unifarbenen, roten Wasserbasislacks

300 g eines üblichen Pastenharzes (gemäß Beispiel aus DE-OS 4 000 889) werden mit 350 g eines handelsüblichen Küpenpigmentes (Colourindex Red 168) vermischt. Mit Dimethylethanolamin wird auf pH 8,5 und durch Zugabe von deionisiertem Wasser auf einen Festkörper von 50 Gew.-% eingestellt. Danach wird in einer Perlmühle transparent ausdispergiert.

### 1.2

1,4 g eines handelsüblichen Verdickers auf Polyacrylsäurebasis (Festkörper: 10 Gew.-%, pH-Wert 7,5) werden mit 129 g der Dispersion aus Herstellungsbeispiel 1 und 40 g des Pastenharzes aus Beispiel 1.1 gemischt. Anschließend werden unter Rühren 24 g eines handelsüblichen, wasserunlöslichen Melaminharzes (Setamine US 138/BB 70 der Firma AKZO) unter Rühren zugesetzt. Anschließend werden 10 g der Rotpaste aus Beispiel 1.1 zugesetzt und homogen eingerührt. Mit deionisiertem Wasser wird auf Applikationsviskosität eingestellt.

### 1.3 Aufbringen des Wasserbasislacks und eines Klarlacks

Der erhaltene Wasserbasislack wird auf ein übliches, phosphatiertes und durch kathodische Tauchlackierung und mit Füller vorbeschichtetes Karosserieblech durch Spritzen in einer Trockenschichtdicke von 30 µm aufgebracht. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine den üblichen Anforderungen in der Automobilserienlackierung gerecht werdende Mehrschichtlackierung.

Weiterhin wird der erhaltene Wasserbasislack auf ein übliches, phosphatiertes und durch kathodische Tauchlackierung und mit Füller vorbeschichtetes Karosserieblech durch Spritzen im Keil (Trockenschichtdicke 0 bis 50 µm) aufgebracht. Dies geschieht mittels eines Lackierautomaten ohne Zwischenablüften. Die Ablaufgrenze beträgt 42 µm.

### Lackbeispiel 2

Lackbeispiel 1 wird wiederholt mit dem Unterschied, daß anstelle der Dispersion aus Herstellungsbeispiel 1 die Dispersion aus Herstellungsbeispiel 2 verwendet wird. Ein Ablaufen war nicht zu beobachten, d.h. die Ablaufgrenze beträgt über 50 µm.

### Lackbeispiel 3

### Herstellung einer Silber-Metallic-Zweischichtlackierung

20 g einer handelsüblichen, für Wasserbasislack geeigneten Aluminiumpaste mit 65 Gew.-% Aluminium, 20 g Butylglykol. 6 g N-Methylpyrrolidon und 1 g eines handelsüblichen Netzmittels werden miteinander zum Bronzeaufschluß vermischt. Danach werden 1.4 g eines handelsüblichen Verdickers auf Polyacrylsäurebasis (Festkörper: 10 Gew.-%, pH-Wert 7.5) hinzugemischt. Danach werden 129 g der Dispersion aus Herstellungsbeispiel 1 und 40 g des Pastenharzes aus Lackbeispiel 1.1 in den Bronzeaufschluß eingerührt. Anschließend werden unter Rühren 24 g eines handelsüblichen, wasserunlöslichen Melaminharzes (Setamine US 138/BB 70 der Firma Akzo) unter Rühren zugesetzt. Mit deionisiertem Wasser wird auf Applikationsviskosität eingestellt.

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 15 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine den üblichen Anforderungen in der Automobilserienlackierung gerecht werdende mehrschichtige Metalliclackierung.

Weiterhin wird der erhaltene Wasserbasislack auf ein übliches, phosphatiertes und durch kathodische Tauchlackierung und mit Füller vorbeschichtetes Karosserieblech durch Spritzen im Keil (Trockenschichtdicke 0 bis 50 µm) aufgebracht. Dies geschieht mittels eines Lackierautomaten ohne Zwischenablüften. Die Ablaufgrenze beträgt 33 µm.

### Lackbeispiel 4

Lackbeispiel 3 wird wiederholt mit dem Unterschied, daß anstelle der Dispersion aus Herstellungsbeispiel 1 die Dispersion aus Herstellungsbeispiel 2 verwendet wird. Die Ablaufgrenze beträgt 47 µm.

## Patentansprüche

1. Wäßriges Überzugsmittel, enthaltend eine wäßrige Bindemitteldispersion, sowie gegebenenfalls ein oder mehrere organische Lösemittel, Vernetzer, Pigmente, Füllstoffe, lackübliche Additive und/oder ein oder mehrere weitere Bindemittel, **dadurch gekennzeichnet, daß** die wäßrige Bindemitteldispersion basiert auf Polyurethan/Polymerisat-Polymerhybriden mit einem Gewichtsverhältnis von Polyurethan- zu Polymerisatanteil von 0,1 : 1 bis 50 : 1, mit einer Hydroxylzahl von 0 bis 150 mg KOH/g, bezogen auf Festharz, wobei an Silizium gebundene Hydroxylgruppen bei der Berechnung der OH-Zahl nicht mitgezählt werden, und einer Säurezahl von 1,5 bis 60 mg KOH/g, bezogen auf Festharz, und einem Gehalt von 0,5 bis 300 mmol Silizium pro 100 g Festharz in Form von in den Polyurethanteil eingebundenen Siloxanbrücken (-Si-O-Si-) und/oder in Form von an den Polyurethanteil gebundenen Silanolgruppen, erhältlich durch Polymerisation von olefinisch ungesättigten Monomeren in Gegenwart von von olefinischen Doppelbindungen freien, Siloxanbrücken (-Si-O-Si-) und/oder Silanolgruppen enthaltenden Polyurethanharzen.

2. Verfahren zur Herstellung eines wäßrigen Überzugsmittels nach Anspruch 1, durch Bereiten einer wäßrigen Bindemitteldispersion und gegebenenfalls Vermischen mit den gewünschten weiteren Anteilen, wie in Anspruch 1 definiert, **dadurch gekennzeichnet, daß** man die wäßrige Bindemitteldispersion herstellt durch Überführen eines Säuregruppen enthaltenden und von olefinischen Doppelbindungen freien Polyurethan-Prepolymers, das durchschnittlich 0,7 bis 9 an Silizium gebundene R'O-Gruppen pro Molekül aufweist, worin
R' = C1- bis C8-Alkyl oder C(O)R"', und
R''' = C1- bis C10-Alkyl
bedeuten, wobei das Polyurethan-Prepolymer gegebenenfalls in einem gegenüber Isocyanat inerten Lösemittel gelöst und seine Säuregruppen gegebenenfalls vorher neutralisiert wurden, durch Zusatz von Wasser in eine wäßrige Dispersion und danach gemeinsame radikalische Polymerisation mit einem oder mehreren olefinisch ungesättigten Monomeren.

3. Verfahren nach Anspruch 2, **dadurch gekennzeichnet, daß** man die Polyurethan-Prepolymere herstellt durch Umsetzung der freien Isocyanatgruppen eines von olefinischen Doppelbindungen freien Polyurethan-Prepolymeren mit
a1) einer oder mehreren Verbindungen der allgemeinen Formel
((H-X-)ₙR)ₐSi(OR')_{b}(R")_{c} (I)
mit X = O,S,NH oder NR'^{v}, bevorzugt NH oder NR'^{v},
R = ein bifunktioneller, trifunktioneller oder tetrafunktioneller, bevorzugt bifunktioneller organischer Rest mit einem Molekulargewicht von 13 bis 500,
R' = C1 bis C8-Alkyl oder C(O)R"',
R" = R"' = C1- bis C10-Alkyl, wobei R" und R"' gleich oder verschieden sein können,
R'^{v} = C1- bis C8-Alkyl, a = 1, 2 oder 3, b = 1, 2 oder 3, c = 0, 1 oder
2, n = 1 bis 3, wobei mehrere Reste R', R" und R"' gleich oder verschieden sind und worin die Summe aus a plus b plus c vier ergibt,
a2) gegebenenfalls einem oder mehreren NH₂- und/oder NH-Gruppen tragenden Alkanolaminen mit einer OH-Funktionalität von mindestens 1, und
a3) gegebenenfalls einem oder mehreren aliphatischen C4-C36-Alkoholen und/oder -Aminen.

4. Verfahren zur Herstellung von Mehrschichtlackierungen durch Auftrag einer Basislack- und Klarlackschicht auf ein gegebenenfalls vorbehandeltes Substrat, **dadurch gekennzeichnet, daß** man die Basislackschicht unter Verwendung eines Überzugsmittels nach Anspruch 1 oder hergestellt nach Anspruch 2 oder 3 erstellt.

5. Verfahren nach Anspruch 4, **dadurch gekennzeichnet, daß** man die Basislackschicht in einer Trockenschichtdicke von 8 bis 50 µm erstellt.

6. Verfahren nach einem der Ansprüche 4 oder 5, **dadurch gekennzeichnet, daß** die Basislackschicht durch einen einzigen Spritzgang erstellt wird.

7. Verwendung der Überzugsmittel nach Anspruch 1 oder erhalten nach Anspruch 2 oder 3 zur Mehrschichtlackierung.

8. Verwendung nach Anspruch 7 zur Herstellung von Mehrschichtlackierungen auf dem Kraftfahrzeugsektor.

## Claims

1. Aqueous coating agent containing an aqueous binder dispersion and optionally one or more organic solvents, crosslinking agents, pigments, fillers, conventional lacquer additives and/or one or more additional binders, **characterised in that** the aqueous binder dispersion is based on polyurethane/polymer polymer hybrids having a ratio by weight of polyurethane to polymer content of 0.1 : 1 to 50 : 1, having a hydroxyl value of 0 to 150 mg KOH/g relative to solid resin, whereby hydroxyl groups bonded to silicon are not included in the calculation of the hydroxyl value, and an acid value of 1.5 to 60 mg KOH/g relative to solid resin, and a content of 0.5 to 300 mmol silicon per 100 g of solid resin in the form of siloxane bridges (-Si-O-Si-) incorporated into the polyurethane component and/or in the form of silanol groups bonded to the polyurethane component, obtainable by polymerisation of olefinically unsaturated monomers in the presence of siloxane bridges (-Si-O-Si-) free from olefinic double bonds and/or silanol group-containing polyurethane resins.

2. Process for the production of an aqueous coating agent according to claim 1 by preparing an aqueous binder dispersion and optionally mixing it with the required additional components as defined in claim 1, **characterised in that** the aqueous binder dispersion is produced by converting a polyurethane prepolymer containing acid groups and free from olefinic double bonds and displaying on average 0.7 to 9 R'O groups per molecule bonded to silicon, wherein
R' = C1 to C8 alkyl or C(O)R''', and
R''' = C1 to C10 alkyl whereby the polyurethane prepolymer has optionally been dissolved in a solvent that is inert in respect of isocyanate and its acid groups optionally neutralised in advance, by addition of water to an aqueous dispersion followed by common radical polymerisation with one or more olefinically unsaturated monomers.

3. Process according to claim 2, **characterised in that** the polyurethane prepolymers are produced by reacting the free isocyanate groups of a polyurethane prepolymer free from olefinic double bonds with
a1) one or more compounds having the general formula
((H-X-)ₙR)ₐSi(OR')_{b}(R")_{c} (I)
where X = O, S, NH or NR'^{v}, preferably NH or NR,^{v},
R = a bifunctional, trifunctional or tetrafunctional, preferably bifunctional, organic radical with a molecular weight of 13 to 500,
R' = C1 to C8 alkyl or C(O)R''',
R'' = R''' = C1 to C10 alkyl, whereby R'' and
R''' can be the same or different,
R'^{v} = C1 to C8 alkyl, a = 1, 2 or 3, b = 1, 2 or 3, c = 0, 1 or 2, n = 1 to 3, whereby multiple radicals R', R'' and R''' are the same or different and wherein the sum of a plus b plus c is four,
a2) optionally one or more alkanol amines carrying NH₂ and/or NH groups and having an OH functionality of at least 1, and
a3) optionally one or more aliphatic C4-C36 alcohols and/or amines.

4. Process for the production of multilayer lacquers by application of a base lacquer and clear lacquer layer to an optionally pretreated substrate, **characterised in that** the base lacquer layer is produced using a coating agent according to claim 1 or prepared according to claim 2 or 3.

5. Process according to claim 4, **characterised in that** the base lacquer layer is produced in a dry film thickness of 8 to 50 µm.

6. Process according to one of claims 4 or 5, **characterised in that** the base lacquer layer is produced by a single spraying cycle.

7. Use of a coating agent according to claim 1 or obtained according to claim 2 or 3 for multilayer lacquering.

8. Use according to claim 7 to produce multilayer lacquers in the automotive sector.

## Revendications

1. Revêtement aqueux contenant une dispersion aqueuse de liants ainsi que, le cas échéant, un ou plusieurs solvants organiques, des réticulants, des pigments, des matières de remplissage, des additifs habituels pour peinture et/ou un ou plusieurs autres liants,
**caractérisé en ce que** la dispersion aqueuse de liants, basée sur des hybrides de polymères composés de polyuréthane et de produits de polymérisation ayant un rapport de poids de la partie polyuréthane, sur la partie produits de polymérisation, de 0,1 : 1 à 50 : 1, ayant un indice d'hydroxyle compris entre 0 mg et 150 mg KOH/g par rapport à la résine solide, où des groupes hydroxyles combinés au silicium ne sont pas pris en compte lors du calcul de l'indice d'hydroxyle (OH), et ayant un indice d'acidité compris entre 1,5 mg et 60 mg KOH/g par rapport à la résine solide, et ayant une teneur comprise entre 0,5 mmol et 300 mmol de silicium par 100 g de résine solide, sous la forme de ponts de siloxane (-Si-O-Si-) combinés à la partie polyuréthane et/ou sous la forme de groupes de silanol combinés à la partie polyuréthane, peut être obtenue par polymérisation de monomères oléfiniquement insaturés, en présence de ponts de siloxane (-Si-O-Si-) exempts de doubles liaisons oléfiniques et/ou en présence de résines de polyuréthane contenant des groupes de silanol.

2. Procédé de fabrication d'un revêtement aqueux selon la revendication 1, obtenu par préparation d'une dispersion aqueuse de liants et, le cas échéant, par le mélange avec les autres parties souhaitées, comme cela est défini dans la revendication 1,
**caractérisé en ce que** l'on fabrique la dispersion aqueuse de liants par transformation d'un prépolymère de polyuréthane contenant des groupes d'acides et exempt de doubles liaisons oléfiniques, lequel prépolymère de polyuréthane comprend en moyenne, par molécule, entre 0,7 et 9 groupes R'O combinés au silicium, où
R' = alkyle C1 à C8 ou C(O)R''', et
R''' = alkyle C1 à C10,
où le prépolymère de polyuréthane est dissous, le cas échéant, dans un solvant inerte par rapport à l'isocyanate et où ses groupes d'acides ont été, le cas échéant, neutralisés auparavant, par addition d'eau dans une dispersion aqueuse, puis par une polymérisation radicalaire commune avec un ou plusieurs monomères oléfiniquement insaturés.

3. Procédé selon la revendication 2, **caractérisé en ce que** l'on fabrique les prépolymères de polyuréthane par transformation des groupes d'isocyanate libres d'un prépolymère de polyuréthane exempt de doubles liaisons oléfiniques,
a1) avec une ou plusieurs combinaisons de la formule générale
((H-X-)ₙR)ₐSi(OR')_{b}(R'')_{c} (I)
avec X = O, S, NH ou NR'^{v}, de préférence NH ou NR'^{v},
R = un reste organique bifonctionnel, trifonctionnel ou tétrafonctionnel, de préférence bifonctionnel, ayant un poids moléculaire compris entre 13 et 500,
R' = alkyle C1 à C8 ou C(O)R''',
R'' = R''' = alkyle C1 à C10, où R'' et R''' peuvent être égaux ou différents,
R'^{v} = alkyle C1 à C8, a = 1, 2 ou 3, b = 1, 2 ou 3, c = 0, 1 ou 2, n = 1 à 3, où plusieurs restes R', R'' et R''' sont égaux ou différents et où la somme de a plus b plus c donne quatre,
a2) le cas échéant avec une ou plusieurs alcanolamines contenant des groupes NH₂ et/ou NH ayant une fonctionnalité d'indice d'hydroxyle (OH) au moins de 1, et
a3) le cas échéant, avec un ou plusieurs alcools et/ou amines aliphatiques C4 à C36.

4. Procédé de fabrication de peintures multicouches par application d'une couche de laque de base et d'une couche de laque transparente sur un substrat ayant été le cas échéant prétraité, **caractérisé en ce que** l'on applique la couche de laque de base en utilisant un revêtement selon la revendication 1 ou fabriqué selon la revendication 2 ou 3.

5. Procédé selon la revendication 4, **caractérisé en ce que** l'on applique la couche de laque de base suivant une épaisseur de couche à sec comprise entre 8 µm et 50 µm.

6. Procédé selon la revendication 4 ou 5, **caractérisé en ce que** la couche de laque de base est appliquée par pulvérisation en un seul passage.

7. Utilisation des revêtements selon la revendication 1 ou obtenus selon la revendication 2 ou 3 pour la réalisation d'une peinture multicouche.

8. Utilisation selon la revendication 7, pour la fabrication de peintures multicouches concernant le secteur automobile.
